# EUROPEAN PATENT SPECIFICATION

(11) **EP 2 558 399 B1**
(45) Date of publication and mention of the grant of the patent: **09.09.2015**
(21) Application number: 11780878.2
(22) Date of filing: 12.04.2011
(51) Int. Cl.: B66C 13/14, E02F 3/36, E02F 9/22, E02F 3/413, B66C 3/00, E02F 3/38

(54) **ARRANGEMENT RELATED TO GUIDING OF HOSES AND/OR CABLES**
ANORDNUNG ZUR FÜHRUNG VON SCHLÄUCHEN UND/ODER KABELN
AGENCEMENT ASSOCIÉ AU GUIDAGE DE TUYAUX ET/OU DE CÂBLES

(30) Priority: 13.04.2010 SE 1000373
(43) Date of publication of application: 20.02.2013
(73) Proprietor: Indexator Rotator Systems AB, 922 21 Vindeln (SE)
(72) Inventor: HARR, Joakim, S-922 32 Vindeln (SE); MIKAELSSON, Lars, S-922 31 Vindeln (SE)
(74) Representative: Körber, Martin Hans
(86) International application number: PCT/SE2011/000066
(87) International publication number: WO 2011/142704

(56) References cited:
- EP-A1- 1 580 159
- EP-A1- 1 580 159
- EP-A1- 1 889 808
- EP-A1- 1 889 808
- EP-A2- 1 083 030
- WO-A1-03/057615
- DE-U1- 20 203 095
- DE-U1- 20 203 095
- JP-U- S5 831 993
- US-A- 4 717 191
- US-A1- 2010 038 495
- US-B1- 6 588 295
- US-B1- 6 588 295

## Description

### Technical field

This invention relates to a device for guiding hoses and/or cables running from a crane jib at its nose portion according to the pre-characterizing part of claim 1.

### Background of the invention

Hoses are used for the communication of pressure medium for driving, e.g. rotators and working implements. The hoses normally run from a pressure medium source along, and sometimes inside, a crane jib which, in its nose portion via a link, e.g. supports a rotator and a working tool arranged below the rotator. Electricity is sometimes used and corresponding considerations thus apply to electric cables. It has proven difficult to provide efficient hosing and/or cabling as a result of the pattern of movements executed by the crane jib with the attached accessory/implement as the hoses/cables are often exposed to surrounding objects that risk causing damage to the hoses/cables.

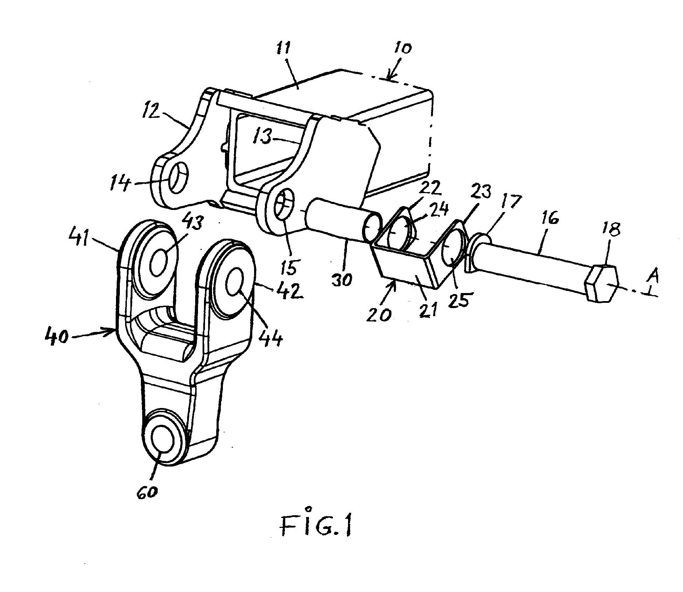

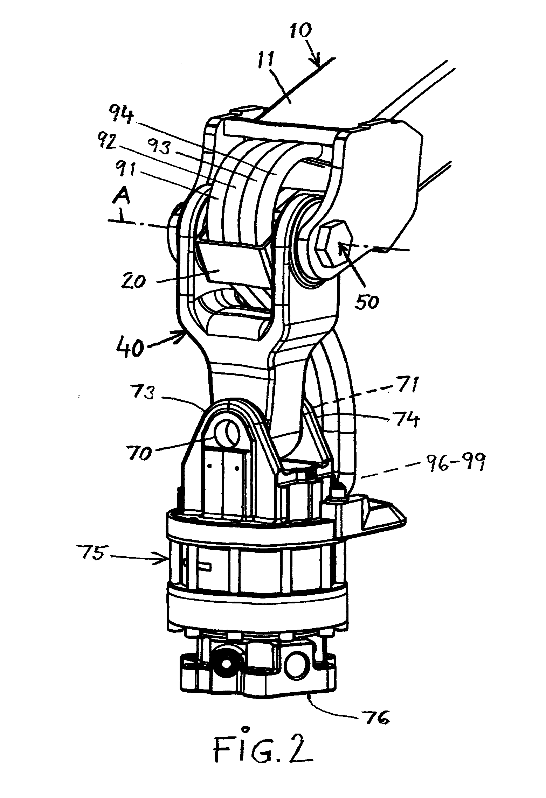

WO 03/057615 A1 discloses a device for mounting a rotating implement (2) (a rotator 4) to a crane arm (1). As it is disclosed on page 5 paragraph 2 of D1, a rigid arm (39) facing the crane arm (1) contains pairs of hydraulic lines (13). In order to provide a smooth transition of the pair of lines (13) between the channel-shaped arm (39) (the means of guiding) and the hollow interior of the link (8), the rigid arm - in the area of its joining with the crane arm (1) - is equipped with a part (40) that is angled downwards towards the crane arm (1) and via outward extensions on both sides of the downward angled part is rigidly joined to the end of the crane arm (1). According to this and as it can be seen from figures 1 and 2 of D1 the link device (8) and the guiding means (part 40) are not supported by the same axis (for example C, fig. 1).

EP 1 580 159 A1 discloses a crane comprising two beams (1, 2) that are pivotal in relation to each other by being connected with each other through a hinge (8), and that comprises a plurality of hoses (14) that extend along the beams (1, 2) in an exposed condition on the outside of and in the region of the hinge (8). In the region of the hinge (8) there is provided a guide (15) provided with a transverse piece (16) at a distance from the guide (15) and at the inside of which the hoses (14) are arranged in order to be held closed to the hinge (8) without bulging. The guide (15) is supported by a separate "dedicated" pin (20).

JP 558 31993 U discloses a figure illustrating the pneumatic, hydraulic or electric supply of a cardanic system. When considering element (27) as guiding means, its rotation axis (D) is not the same axis as the axis (B) when considering element (4) as link device rotating about its axis (B).

US 6588 295 B1 discloses a device for guiding a cable set arranged at a manipulator where the cable set forms a slack in the transition between a first and a second manipulator part joined by a link, including a guiding device that freely surrounds the cable set.

EP 1 889 808 A1 discloses a crane arm (1) with a cardanic fixing system (2) for working tools (3) (like a clamshell). There are hoses and/or cables leading from the crane arm (1) to the tool (3).

### Aim of the invention

One aim of this invention is to provide an extremely advantageous device for guiding hoses and/or cables running from a crane jib via its nose portion. This aim is achieved in that a first/upper swing joint is arranged between the crane nose and a link device and a second/lower swing joint is arranged between the link device and an accessory/tool in the form of, e.g. a rotator, wherein the upper swing joint includes a means for guiding of the hoses and/or cables and further in that the upper swing joint further includes a pin supporting the guiding means wherein the guiding means can swing relative to the pin, and wherein the pin extends through the holes in the side plates of the crane nose and through the holes in the lugs of the link device so that an upper swing joint is formed between the crane nose and the link device. Further embodiments of the invention are described in the dependent claims.

### Advantages of the invention

The hosing and/or cabling according to the invention is arranged in such a manner that the risk of damage to the hoses and/or cables is virtually eliminated. The invention offers both technical and economic advantages.

### Brief description of the drawings

Embodiments of the invention will now be described with reference to the accompanying drawings.
**Figure 1** is an exploded view of the device according to the invention.
**Figures 2** **and** **3** are perspective views of a first hosing arrangement according to the invention.
**Figures 4** **and** **5** are perspective views of a second hosing arrangement according to the invention.

### Detailed description of illustrated embodiments

Figure 1 shows a crane jib 10 with a nose portion 11 supporting two side plates 12, 13 each comprising a hole 14 and 15 respectively for the attachment of a pin 16 with a head 17 and a nut 18.

The invention furthermore includes a means 20 for the guiding of hoses and/or cables. The guiding means 20 comprises a flat central part 21 and two legs 22, 23. The legs 22, 23 each comprise a hole 24 and 25 respectively for attachment to a sliding sleeve 30 or to the pin 16. The function of the sliding sleeve 30 is to serve as a sliding bearing when necessary and it may consist of a plastic tube. The flat central part 21 may of course also have a non-flat shape if appropriate.

A link device 40 is provided at its upper end with two lugs 41, 42 arranged at a distance from one another and each comprising a hole 43 and 44 respectively. The pin 16 extends through the holes 14, 15 in the side plates 12, 13 and through the holes 43, 44 in the lugs 41, 42 so that an upper swing joint 50 is formed between the crane nose 11 and the link device 40.

The guiding means 20 and, where applicable, the sliding sleeve 30 are arranged on the pin 16 in a region between the lugs 41, 42 of the link device 40. The upper swing joint 50 swings about an axis A.

The link device 40 is provided at its lower end with a hole 60 cooperating with holes 70, 71 in two fastening lugs 73, 74 arranged at a distance from one another on a rotator 75. A pin (not shown) runs through the holes 60, 70, 71 so that a lower swing joint 80 is formed. The lower swing joint 80 swings about an axis B. The swing axes A and B are at right angles to one another in this embodiment, meaning that the link device 40 acts like a universal joint so that the rotator 75 can swing relative to the crane jib 10 about the two different axes A and B. It should be noted that the lower end of the link device 40 may also include a brake device. The link device 40 may also include a weighing function.

The lower end 76 of the rotator comprises fastening points for an implement fastener and/or a working implement in the form of, e.g. a gripper or a processor unit, etc. Connection points for the transmission of pressure medium and/or the transmission of electricity to the relevant implement are arranged at the lower end 76 of the rotator.

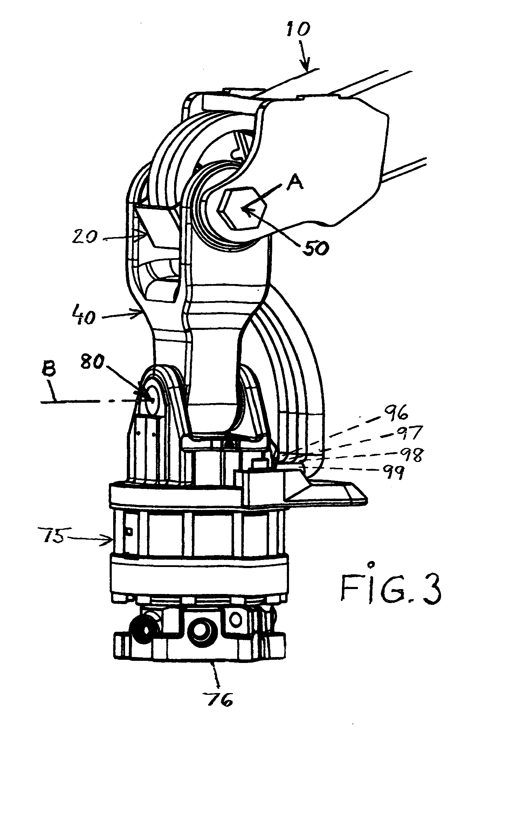

Figures 2 and 3 show embodiments of a hosing arrangement according to the invention, e.g. in the case of what is referred to as a forwarder application. In the embodiment shown, hoses 91-94 extend from the inner region of the crane jib 10 and run above the upper bearing 50, while the hoses 91-94 are simultaneously located inside the upward guiding means 20 so that the hoses are guided at the bearing 50, after which the hoses continue to the connection points 96-99 on the side of the rotator 75 directed towards the crane jib 10. The hosing arrangement shown means that the hoses 91-94 are collected together in an organised manner and are well protected from external influences in connection with the relevant operating cycles of the device in question. The same conditions and considerations apply in the case of electric cables.

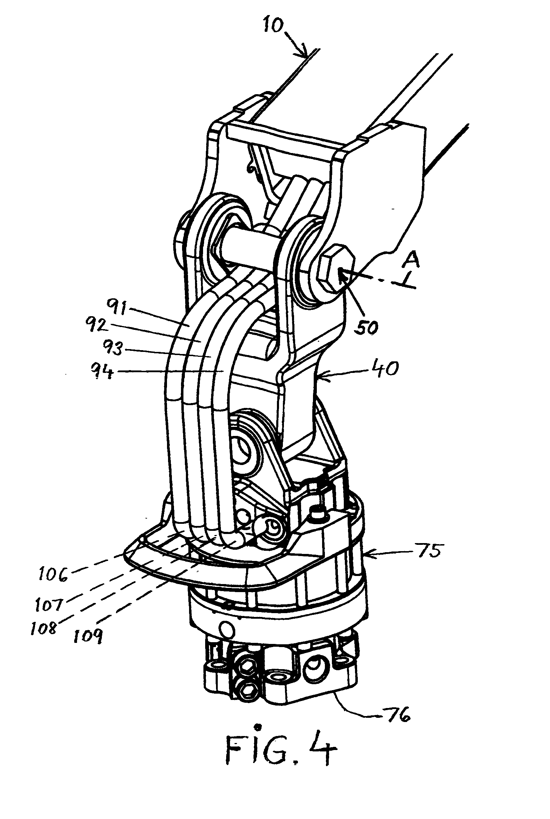

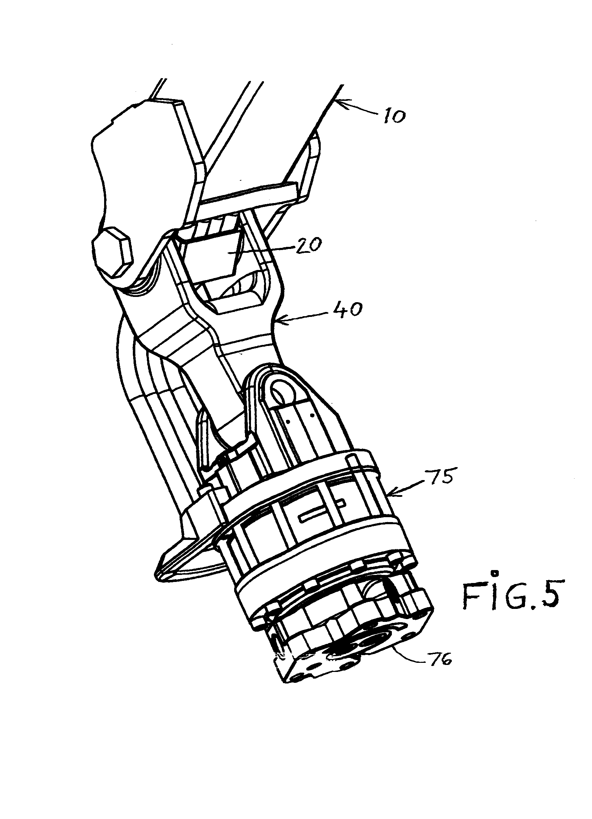

Figures 4 and 5 show embodiments of a hosing arrangement according to the invention, e.g. in the case of what is referred to as a lorry application. In the embodiment shown, the hoses 91-94 extend from the inner region of the crane jib 10 and run under the upper bearing 50, while the hoses simultaneously run inside the guiding means 20 and are guided at the bearing 50, after which the hoses continue to the connection points 106-109 on the side of the rotator 75 directed away from the crane jib 10. In this case, the rotator 75 points in the opposite direction to that shown in Figures 2 and 3. The hosing arrangement shown means that the hoses 91-94 are collected together in an organised manner and are well protected from external influences during the operating cycles performed. The same conditions and considerations apply in the case of electric cables.

In general, the rotary position of the guiding means 20 is automatically adapted to the pattern of movements of the hoses/cables as the guiding means is rotatably mounted relative to the pin 16.

As indicated hereinabove, the sliding sleeve 30 thus facilitates the rotary bearing function, although this can be omitted under certain conditions provided that a direct bearing between the upward guiding means 20 and the pin 16 provides the required function. The sliding sleeve 30 may also be designed to be shorter than the distance between the legs 22 and 23, the sliding sleeve 30 only being provided to facilitate the movements of the hoses/cables during operation of the crane.

It will be clear that the details of the design of the guiding means 20 may be varied, the essential point being that the hoses/cables are guided relative to the upper swing joint 50. In the embodiments shown, the hoses/cables run internally in the crane jib 10, but it will be clear that the invention may also be applied to embodiments in which the hoses/cables run externally on the crane jib 10.

The invention is thus not limited to what is illustrated and described here and amendments and modifications are of course conceivable within the scope of the following claims.

## Claims

1. Device for guiding hoses and/or cables running from a crane jib via its nose portion, wherein a first/upper swing joint (50) is arranged between the crane nose (11) and a link device (40) and a second/lower swing joint (80) is arranged between the link device (40) and an accessory/tool in the form of, e.g. a rotator (75), wherein the upper swing joint (50) includes a means (20) for guiding of the hoses (91 - 94) and/or cables
**characterized in that**
the upper swing joint (50) further includes a pin (16) supporting the guiding means (20) wherein the guiding means (20) can swing relative to the pin (16), and wherein
the pin (16) extends through the holes (14,15) in the side plates (12,13) of the crane nose (11) and through
the holes (43,44) in the lugs (41,42) of the link device (40) so that an upper swing joint (50) is formed between the crane nose (11) and the link device (40).

2. Device according to claim 1,
**characterized in that**
the hoses (91 - 94) and/or cables are connected to the accessory/tool (75).

3. Device according to any one of claims 1 or 2,
**characterized in that**
the guiding means (20) comprises a central portion (21) and two legs (22, 23) and that the legs (22, 23) each comprise a hole (24, 25) for attachment to a sliding sleeve (30) or to a pin (16).

4. Device according to claim 3,
**characterized in that**
the central portion (21) of the guiding means (20) is flat.

5. Device according to any one of claims 1 to 4,
**characterized in that**
the hoses (91 - 94) and/or cables run in such a manner that they extend through an inner space in the guiding means (20).

6. Device according to claims 1 to 5,
**characterized in that**
the hoses (91 - 94) and/or cables run inside the crane nose (11) and on top of the pin (16).

7. Device according to any one of claims 1 to 5,
**characterized in that**
the hoses (91 - 94) and/or cables run inside the crane nose (11) and on the underside of the pin (16).

8. Device according to any one of claims 1 to 7,
**characterized in that**
the hoses (91 - 94) and/or cables are connected to the accessory/tool (75) on a side directed towards the crane jib (10).

9. Device according to any one of claims 1 to 7,
**characterized in that**
the hoses (91 - 94) and/or cables are connected to the accessory/tool (75) on a side directed away from the crane jib (10).

## Patentansprüche

1. Vorrichtung zur Führung von Schläuchen und/oder Kabeln von einem Kranausleger (10) über sein Nasenstück , wobei ein erstes/oberes Schwenkgelenk (50) zwischen der Krannase (11) und einer Verbindungsvorrichtung (40) angeordnet ist und ein zweites/unteres Schwenkgelenk (80) zwischen der Verbindungsvorrichtung (40) und einem Zubehörteil/Gerät in Form eines z.B. Rotators (75) angeordnet ist, wobei das obere Schwenkgelenk (50) Mittel (20) zur Führung der Schläuche (91- 94) und/oder Kabel aufweist.
**dadurch gekennzeichnet,**
**dass** das obere Schwenkgelenk (50) ferner einen Bolzen (16) zum Stützen des Führungsmittels (20) aufweist, wobei das Führungsmittel (20) relativ zu dem Bolzen (16) schwingen kann, und wobei
sich der Bolzen (16) entlang der Bohrungen (14,15) in den Seitenplatten (12,13) der Krannase (11) und entlang der Bohrungen (43,44) in den Spannbacken (41, 42) der Verbindungsvorrichtung (40) erstreckt, so dass zwischen der Krannase (11) und der Verbindungsvorrichtung (40) ein oberes Schwenkgelenk (50) gebildet ist.

2. Vorrichtung nach Anspruch 1,
**dadurch gekennzeichnet,**
**dass** die Schläuche (91 - 94) und/oder Kabel an das Zubehörteil/Gerät (75) angeschlossen sind.

3. Vorrichtung nach einem der Ansprüche 1 oder 2,
**dadurch gekennzeichnet,**
**dass** das Führungsmittel (20) ein Mitteleil (21) sowie zwei Stützfüße (22,23) umfaßt und dass ein jeder der Stützfüße (22,23) eine Bohrung (24,25) zum Befestigen an einer Schiebehülse (30) oder an einem Bolzen (16) aufweist.

4. Vorrichtung nach Anspruch 3,
**dadurch gekennzeichnet,**
**dass** das Mittelteil (21) des Führungsmittels (20) flach ausgebildet ist

5. Vorrichtung nach einem der Ansprüche 1 bis 4,
**dadurch gekennzeichnet,**
**dass** die Schläuche (91 - 94) und/oder Kabel so geführt sind, dass sie sich entlang eines Innenraums des Führungsmittels (20) erstrecken.

6. Vorrichtung nach einem der Ansprüche 1 bis 5,
**dadurch gekennzeichnet,**
**dass** die Schläuche (91 - 94) und/oder Kabel im Inneren der Krannase (11) sowie oberhalb des Bolzens (16) geführt sind.

7. Vorrichtung nach einem der Ansprüche 1 bis 5,
**dadurch gekennzeichnet,**
**dass** die Schläuche (91 - 94) und/oder Kabel im Inneren der Krannase (11) sowie unterhalb des Bolzens (16) geführt sind.

8. Vorrichtung nach einem der Ansprüche 1 bis 7,
**dadurch gekennzeichnet,**
**dass** die Schläuche (91 - 94) und/oder Kabel mit dem Zubehörteil/Gerät (75) an einer dem Kranausleger (10) zugewandten Seite verbunden sind.

9. Vorrichtung nach einem der Ansprüche 1 bis 7,
**dadurch gekennzeichnet,**
**dass** die Schläuche (91 - 94) und/oder Kabel mit dem Zubehörteil/Gerät (75) an einer dem Kranausleger (10) abgewandten Seite verbunden sind.

## Revendications

1. Dispositif pour guider des tuyaux flexibles et/ou des câbles passant sur une flèche de grue via sa partie de nez, où une première articulation de pivotement (50), articulation supérieure, est agencée entre le nez de la grue (11) et un dispositif de liaison (40) et une seconde articulation de pivotement (80), articulation inférieure, est agencée entre le dispositif de liaison (40) et un accessoire/outil sous la forme par exemple d'un rotateur (75), l'articulation de pivotement supérieure (50) comportant des moyens (20) pour guider les tuyaux flexibles (91 - 94) et/ou câbles,
**caractérisé en ce que**
l'articulation de pivotement supérieure (50) comprend en outre un axe (16) supportant les moyens de guidage (20), les moyens de guidage (20) pouvant pivoter par rapport à l'axe (16), et l'axe (16) s'étendant à travers les trous (14, 15) dans les plaques latérales (12, 13) du nez (11) de la grue et à travers les trous (43, 44) dans les excroissances (41, 42) du dispositif de liaison (40) de façon qu'une articulation supérieure de pivotement (50) soit formée entre le nez (11) de la grue et le dispositif de liaison (40).

2. Dispositif selon la revendication 1, **caractérisé en ce que** les tuyaux flexibles (91 - 94) et/ou câbles sont connectés à l'accessoire/outil (75).

3. Dispositif selon la revendication 1 ou 2, **caractérisé en ce que** les moyens de guidage (20) comprennent une partie centrale (21) et deux jambes (22, 23) et **en ce que** les jambes (22, 23) comprennent chacune un trou (24, 25) pour la connexion à un manchon coulissant (30) ou à un axe (16).

4. Dispositif selon la revendication 3, **caractérisé en ce que** la partie centrale (21) des moyens de guidage (20) est plate.

5. Dispositif selon l'une des revendications 1 à 4, **caractérisé en ce que** les tuyaux flexibles (91 - 94) et/ou câbles sont guidés de façon qu'ils s'étendent à travers un espace intérieur dans les moyens de guidage (20).

6. Dispositif selon l'une des revendications 1 à 5, **caractérisé en ce que** les tuyaux flexibles (91 - 94) et/ou câbles sont guidés à l'intérieur du nez (11) de la grue et au-dessus de l'axe (16).

7. Dispositif selon l'une des revendications 1 à 5, **caractérisé en ce que** les tuyaux flexibles (91 - 94) et/ou câbles sont guidés à l'intérieur du nez (11) de la grue et sur le côté inférieur de l'axe (16).

8. Dispositif selon l'une des revendications 1 à 7, **caractérisé en ce que** les tuyaux flexibles (91 - 94) et/ou câbles sont connectés à l'accessoire/outil (75) sur un côté orienté vers la flèche (10) de la grue.

9. Dispositif selon l'une des revendications 1 à 7, **caractérisé en ce que** les tuyaux flexibles (91 - 94) et/ou câbles sont connectés à l'accessoire/outil (75) sur un côté éloigné de la flèche (10) de la grue.
